# EUROPÄISCHE PATENTSCHRIFT

(11) **EP 2 603 403 B1**
(45) Veröffentlichungstag und Bekanntmachung des Hinweises auf die Patenterteilung: **21.01.2015**
(21) Anmeldenummer: 11743806.9
(22) Anmeldetag: 01.08.2011
(51) Int. Cl.: B60R 1/00

(54) **VERFAHREN ZUM ANZEIGEN VON BILDERN AUF EINER ANZEIGEEINRICHTUNG IN EINEM KRAFTFAHRZEUG, FAHRERASSISTENZSYSTEM UND KRAFTFAHRZEUG**
METHOD OF DISPLAYING PICTURES ON A DISPLAY IN A MOTOR VEHICLE, CORRESPONDING DRIVER ASSISTANCE SYSTEM AND VEHICLE
METHODE D'AFFICHAGE D'IMAGES SUR UN PANNEAU D'AFFICHAGE DANS UN VÉHICULE AUTOMOBILE, SYSTÈME D'AIDE À LA CONDUITE ET VÉHICULE

(30) Priorität: 12.08.2010 DE 102010034127
(43) Veröffentlichungstag der Anmeldung: 19.06.2013
(73) Patentinhaber: Valeo Schalter und Sensoren GmbH, 74321 Bietigheim-Bissingen (DE)
(72) Erfinder: MATHES, Joachim, 74080 Heilbronn (DE); REILHAC, Patrice, 73732 Esslingen (DE)
(86) Internationale Anmeldenummer: PCT/EP2011/063177
(87) Internationale Veröffentlichungsnummer: WO 2012/019931

(56) Entgegenhaltungen:
- EP-A1- 1 179 958

## Beschreibung

Die Erfindung betrifft ein Verfahren zum Anzeigen von Bildern auf einer Anzeigeeinrichtung eines Fahrerassistenzsystems in einem Kraftfahrzeug. Es werden Bilddaten über eine Umgebung des Kraftfahrzeugs durch zumindest eine optische Erfassungseinrichtung des Fahrerassistenzsystems erfasst. Die Bilddaten werden zu einem Bild verarbeitet, welches von oberhalb des Kraftfahrzeugs eine Draufsicht (aus einer Vogelperspektive) auf zumindest einen Bereich des Kraftfahrzeugs und einen Umgebungsbereich neben dem Kraftfahrzeug zeigt. Das Bild kann dann auf der Anzeigeeinrichtung angezeigt werden. Die Erfindung betrifft außerdem ein Fahrerassistenzsystem zum Durchführen eines solchen Verfahrens sowie ein Kraftfahrzeug mit einem derartigen Fahrerassistenzsystem.

Es ist Stand der Technik, eine Anzeigeeinrichtung in einem Kraftfahrzeug einzusetzen, nämlich zum Anzeigen von Bildern. Eine solche Anzeigeeinrichtung kann beispielsweise in Form eines LCD-Displays oder aber als ein Bildprojektor (Head-Up-Display) bereitgestellt werden. Es ist auch bekannt, optische Kameras zur Erfassung der Umgebung des Kraftfahrzeugs zu verwenden. In der Regel werden solche Kameras an einer äußeren Oberfläche des Kraftfahrzeugs angebracht, nämlich z. B. an einem Stoßfänger oder aber einer Seitenflanke des Kraftfahrzeugs. Solche Kameras weisen bekanntlich einen relativ breiten Erfassungswinkel auf und werden somit auch als Fischaugenkameras bezeichnet.

Die Bilddaten von solchen Kameras können zu einem gemeinsamen Bild verarbeitet werden, welches das Kraftfahrzeug sowie seine Umgebung aus einer Vogelperspektive zeigt. Mit anderen Worten kann ein solches Umgebungsbild eine Draufsicht auf das Kraftfahrzeug sowie seine Umgebung darstellen. Ein solches Umgebungsbild beinhaltet also ein Abbild des Kraftfahrzeugs, wie auch ein Abbild der Umgebung. Da die Kameras in der Regel nur die Umgebung, nicht jedoch das Kraftfahrzeug selbst erfassen können, wird das Abbild des Kraftfahrzeugs aus einer Vogelperspektive in der Regel in einem Speicher vorab abgelegt. Das Abbild der Umgebung hingegen wird in Echtzeit angepasst und aus den fortlaufend erfassten Bilddaten der Kameras jeweils neu erzeugt.

Das Dokument EP1179958A1 offenbart ein Verfahren zum Anzeigen von Bildern auf einer Anzeigeeinrichtung eines Fahrerassistenzsystems in einem Kraftfahrzeug sowie ein Fahrerassistenzsystem nach dem Stand der Technik.

Dieses Dokument offenbart ein Verfahren zum Anzeigen von Bildern auf einer Anzeigeeinrichtung eines Fahrerassistenzsystems in einem Kraftfahrzeug, mit den Schritten:
- Erfassen von Bilddaten über eine Umgebung des Kraftfahrzeugs durch zumindest eine optische Erfassungseinrichtung des Fahrerassistenzsystems,
- Verarbeiten der Bilddaten zu einem Bild, welches von oberhalb des Kraftfahrzeugs eine Draufsicht auf zumindest einen Bereich des Kraftfahrzeugs und einen Umgebungsbereich neben dem Kraftfahrzeug zeigt, und
- Anzeigen des Bildes auf der Anzeigeeinrichtung, wobei einem ersten Betriebsmodus des Fahrerassistenzsystems der angezeigte Umgebungsbereich weiter vom Kraftfahrzeug weg reicht als in einem vom ersten Betriebsmodus unterschiedlichen zweiten Betriebsmodus.

Weiter offenbart dieses Dokument ein Fahrerassistenzsystem für ein Kraftfahrzeug, mit:
- zumindest einer optischen Erfassungseinrichtung zum Erfassen von Bilddaten über eine Umgebung des Kraftfahrzeugs,
- einer Steuereinrichtung zum Verarbeiten der Bilddaten zu einem Bild, welches von oberhalb des Kraftfahrzeugs eine Draufsicht auf zumindest einen Bereich des Kraftfahrzeugs und einen Umgebungsbereich neben dem Kraftfahrzeug zeigt, und
- einer Anzeigeeinrichtung zum Anzeigen des Bildes, wobei die Steuereinrichtung dazu ausgelegt ist, in einem ersten Betriebsmodus des Fahrerassistenzsystems ein Bild zu erzeugen, in welchem der Umgebungsbereich weiter vom Kraftfahrzeug weg reicht als in einem Bild, welches in einem vom ersten Betriebsmodus unterschiedlichen zweiten Betriebsmodus erzeugbar ist.

Ein derartiges Verfahren ist beispielsweise aus der Druckschrift US 7 277 123 B1 bekannt. Im Stand der Technik zeigt das Umgebungsbild einen relativ kleinen Bereich der Umgebung neben dem Kraftfahrzeug. Es wird nämlich der Umgebungsbereich nur bis zu einer relativ geringen Entfernung vom Kraftfahrzeug weg dargestellt. Dies hat den Hintergrund, dass der Fahrer in der Lage sein soll, anhand des Umgebungsbildes die jeweiligen Abstände zwischen dem Kraftfahrzeug und fahrzeugexternen Hindernissen einzuschätzen. Das Umgebungsbild dient im Stand der Technik also der Kollisionsvermeidung bzw. der Kollisionswarnung.

Es ist Aufgabe der Erfindung, einen Weg aufzuzeigen, wie bei einem Verfahren der eingangs genannten Gattung der Einsatzbereich bzw. die Funktionalität der Anzeigeeinrichtung beim Anzeigen des Umgebungsbildes im Vergleich zum Stand der Technik erweitert werden kann.

Diese Aufgabe wird erfindungsgemäß durch ein Verfahren mit den Merkmalen gemäß Patentanspruch 1 gelöst, wie auch durch ein Fahrerassistenzsystem mit den Merkmalen gemäß Patentanspruch 10 sowie durch ein Kraftfahrzeug mit den Merkmalen des Patentanspruchs 11. Vorteilhafte Ausführungen der Erfindung sind Gegenstand der abhängigen Patentansprüche und der Beschreibung.

Ein erfindungsgemäßes Verfahren dient zum Anzeigen von Bildern auf einer Anzeigeeinrichtung eines Fahrerassistenzsystems in einem Kraftfahrzeug. Es werden Bilddaten über eine Umgebung des Kraftfahrzeugs durch zumindest eine optische Erfassungseinrichtung des Fahrerassistenzsystems erfasst. Diese Bilddaten werden dann zu einem Bild verarbeitet, welches von oberhalb des Kraftfahrzeugs eine Draufsicht auf zumindest einen Bereich des Kraftfahrzeugs und einen Umgebungsbereich neben dem Kraftfahrzeug zeigt. Das Bild wird auf der Anzeigeeinrichtung angezeigt. Ein Grundgedanke der Erfindung besteht darin, dass in einem ersten Betriebsmodus des Fahrerassistenzsystems der angezeigte bzw. abgebildete Umgebungsbereich weiter vom Kraftfahrzeug weg reicht als in einem vom ersten Betriebsmodus unterschiedlichen zweiten Betriebsmodus.

Die Funktionalität bzw. der Einsatzbereich der Anzeigeeinrichtung beim Anzeigen des Bildes wird somit im Vergleich zum Stand der Technik dadurch erweitert, dass in einem ersten Betriebsmodus das Bild den Umgebungsbereich bis zu einer größeren Entfernung vom Kraftfahrzeug weg zeigt als im zweiten Betriebsmodus. Mit anderen Worten wird zumindest auf einer Seite des Kraftfahrzeugs im ersten Betriebsmodus ein größerer Umgebungsbereich als im zweiten Betriebsmodus abgebildet. Die Erfindung hat den Vorteil, dass sich der Fahrer im ersten Betriebsmodus über einen insgesamt größeren Umgebungsbereich des Kraftfahrzeugs informieren kann; er kann in dem Bild auch solche fahrzeugexterne Hindernisse sehen, die sich relativ weit weg vom Kraftfahrzeug befinden. Dies erweist sich insbesondere bei einem Fahrerassistenzsystem zur Unterstützung eines Parkvorgangs als besonders vorteilhaft: Erfindungsgemäß wird während einer Vorbeifahrt des Kraftfahrzeugs an einer Parklücke, diese Parklücke durch das Fahrerassistenzsystem vermessen und eine Parkbahn für den Parkvorgang berechnet, so kann der Fahrer in dem dargestellten Bild nicht nur die Umgebung in unmittelbarer Nähe des Kraftfahrzeugs, sondern auch gegebenenfalls die Parklücke sehen, die unter Umständen einige Meter vom Kraftfahrzeug entfernt sein kann. Der Fahrer kann dann anhand des angezeigten Bildes den gesamten Parkvorgang beobachten. Im zweiten Betriebsmodus kann der Fahrer hingegen besonders genau auf die Abstände zwischen dem Kraftfahrzeug und in der unmittelbaren Umgebung befindlichen Hindernissen zurück schließen; denn es wird lediglich ein kleinerer Umgebungsbereich abgebildet.

Also zeigt das Bild eine Draufsicht auf den zumindest einen Bereich des Kraftfahrzeugs und den Umgebungsbereich neben dem Kraftfahrzeug, nämlich von oberhalb des Kraftfahrzeugs. Dies bedeutet, dass in dem Bild das Kraftfahrzeug sowie der Umgebungsbereich aus einer Vogelperspektive dargestellt sind.

Wie bereits ausgeführt, erweist sich das Verfahren insbesondere bei einem Fahrerassistenzsystem zur Unterstützung eines Parkvorgangs als besonders vorteilhaft. Aus diesem Grund ist in der Erfindung vorgesehen, dass in dem ersten Betriebsmodus - in diesem wird ein größerer Umgebungsbereich gezeigt - eine Parklücke durch das Fahrerassistenzsystem vermessen wird. In einer Ausführungsform wird das Kraftfahrzeug unter Unterstützung des Fahrerassistenzsystems in die Parklücke eingeparkt und/oder aus der Parklücke ausgeparkt. Der weiterreichende Umgebungsbereich kann somit dann abgebildet werden, wenn eine Parklücke vermessen bzw. erfasst wird und/oder ein Parkvorgang mit Hilfe des Fahrerassistenzsystems durchgeführt wird. Dieser Parkvorgang kann ein semi-autonomer (halbautomatischer) Parkvorgang oder aber ein vollständig autonomer (vollautomatischer) Parkvorgang sein. Im ersteren wird durch das Fahrerassistenzsystem lediglich eine Parkbahn berechnet, entlang welcher das Kraftfahrzeug kollisionsfrei in die Parklücke eingeparkt bzw. aus dieser ausgeparkt werden kann; beim halb-autonomen Parkvorgang werden dem Fahrer lediglich Hinweise ausgegeben, in welcher Richtung er das Lenkrad lenken soll. Demgegenüber beinhaltet ein automatischer Parkvorgang, dass das Fahrerassistenzsystem auch automatisch in die Lenkung des Kraftfahrzeugs eingreift und somit das Kraftfahrzeug entlang der berechneten Parkbahn führt. Der Fahrer braucht dann lediglich Gas zu geben und zu bremsen. Alternativ kann das Kraftfahrzeug in einem automatischen Parkvorgang auch automatisch beschleunigt bzw. abgebremst werden, nämlich durch das Fahrerassistenzsystem.

Das Anzeigen des weiterreichenden Umgebungsbereichs beim Vermessen einer Parklücke und/oder während eines Parkvorgangs hat den Vorteil, dass der Fahrer nicht nur den Umgebungsbereich unmittelbar neben dem Kraftfahrzeug sehen kann, sondern auch in der Umgebung vorhandene Parklücken betrachten kann. Der Fahrer kann anhand des Bildes feststellen, ob eine vom Kraftfahrzeug entfernte Parklücke für das Einparken geeignet ist oder nicht.

Der zweite Betriebsmodus ist ein vom ersten Betriebsmodus unterschiedlicher Modus. Dies bedeutet, dass im zweiten Betriebsmodus bevorzugt keine Vermessung der Parklücken stattfindet und/oder keine Parkvorgänge durchgeführt werden. Der zweite Betriebsmodus kann beispielsweise ein Modus sein, bei welchem der Fahrer vor der Anwesenheit eines Hindernisses in der unmittelbaren Umgebung des Kraftfahrzeugs gewarnt wird. Im zweiten Betriebsmodus wird also der Umgebungsbereich nur bis zu einer geringen Entfernung vom Kraftfahrzeug weg abgebildet. Der Fahrer kann somit im zweiten Betriebsmodus mit hoher Genauigkeit auf die jeweiligen Abstände zwischen dem Kraftfahrzeug und fahrzeugexternen Hindernissen zurück schließen.

Es kann auch vorgesehen sein, dass von dem ersten Betriebsmodus zum zweiten Betriebsmodus dann übergegangen wird, wenn das Kraftfahrzeug in eine Parklücke gelangt ist bzw. wenn ein Restweg der berechneten Parkbahn ein vorgegebenes Minimum unterschreitet. Dann wird am Ende des Parkvorgangs der Umgebungsbereich nur bis zu der geringeren Entfernung abgebildet, und der Fahrer kann anhand des Bildes überwachen, ob das Kraftfahrzeug kollisionsfrei in eine Endposition in der Parklücke geführt wird.

In dem angezeigten Bild kann das Abbild des Kraftfahrzeugs ortsfest dargestellt werden, während das Abbild des Umgebungsbereichs aus den Bilddaten jeweils neu erzeugt werden kann. Das Abbild des Kraftfahrzeugs kann beispielsweise mittig auf der Anzeigeeinrichtung bzw. mittig im Bild angezeigt werden, so dass die vollständige Umgebung um das Kraftfahrzeug herum symmetrisch angezeigt werden kann.

Das Abbild des Kraftfahrzeugs ist vorzugsweise vorgespeichert, d. h. dieses Abbild wird nicht anhand der Bilddaten der zumindest einen Erfassungseinrichtung erzeugt, sondern es kann in einem Speicher abgelegt sein. Das Abbild des Umgebungsbereichs hingegen wird in Echtzeit erzeugt bzw. aus den fortlaufend erfassten Bilddaten dynamisch jeweils neu erzeugt, nämlich kontinuierlich. Diese Ausführungsform beruht auf der Tatsache, dass die zumindest eine Erfassungseinrichtung in der Regel nur die Umgebung des Kraftfahrzeugs, nicht jedoch das Kraftfahrzeug selbst erfassen kann.

Vorzugsweise zeigt das Bild eine Draufsicht auf das gesamte Kraftfahrzeug sowie den Umgebungsbereich um das Kraftfahrzeug herum. Auf diese Weise kann sich der Fahrer über die gesamte Umgebung um das Kraftfahrzeug herum informieren sowie fahrzeugexterne Hindernisse sowohl auf der linken und rechten Seite des Kraftfahrzeugs als auch vor und hinter dem Kraftfahrzeug betrachten.

Es erweist sich als besonders vorteilhaft, wenn sich der weiterreichende Umgebungsbereich - im ersten Betriebsmodus - bis zu einer Entfernung vom Kraftfahrzeug weg erstreckt, die in einem Wertebereich von 7 m bis 13 m liegt. Diese Entfernung kann beispielsweise 10 m betragen. Auf diesem Wege gelingt es, dem Fahrer alle Parklücken sowie alle Hindernisse anzuzeigen, die sich bis zu einer Entfernung von 7 m oder 8 m oder 9 m oder 10 m oder 11 m oder 12 m oder 13 m von dem Kraftfahrzeug befinden. Insbesondere können somit Parklücken angezeigt werden, die sich relativ weit weg vom Kraftfahrzeug befinden.

Wird der weiterreichende Umgebungsbereich neben dem Kraftfahrzeug angezeigt so kann das Bild aus den jeweils aktuell erfassten Bilddaten oder aber mittels einer Odometrie erzeugt werden. Dies bedeutet, dass das Bild entweder alleine aus den jeweils aktuell erfassten Bilddaten oder aus den jeweils aktuell erfassten Bilddaten und zusätzlich auch aus zuvor erfassten Bilddaten erzeugt werden kann. Eine solche Odometrie kann beispielsweise dann von Vorteil sein, wenn die zumindest eine Erfassungseinrichtung den Umgebungsbereich nur bis zu einer geringeren Entfernung vom Kraftfahrzeug weg erfassen kann, als dies für die Erzeugung des Bildes erforderlich ist. In einem solchen Falle können dann zur Erzeugung des Bildes auch Bilddaten verwendet werden, die zu einem früheren Zeitpunkt erfasst wurden. Es gelingt somit, den weiterreichenden Umgebungsbereich auch dann abzubilden, wenn die Reichweite der Erfassungseinrichtung relativ gering ist, nämlich kleiner als die gewünschte Entfernung. Wird jedoch eine Erfassungseinrichtung mit einer größeren Reichweite eingesetzt, so wird das Abbild des Umgebungsbereichs vorzugsweise alleine aus den jeweils aktuell erfassten Bilddaten erzeugt.

Die Bilddaten können derart verarbeitet werden, dass das angezeigte Bild die Draufsicht aus einer Blickrichtung zeigt, die mit einer Fahrzeughochachse zusammenfällt oder zur Fahrzeughochachse geneigt ist. Dies kann z. B. so aussehen, dass im Stillstand des Kraftfahrzeugs das angezeigte Bild die Draufsicht aus einer Blickrichtung zeigt, die mit der Fahrzeughochachse zusammenfällt. Dann werden das Kraftfahrzeug sowie die Umgebung von oberhalb des Kraftfahrzeugs in einem rechten Winkel bezüglich der Bildebene gezeigt. Wird das Kraftfahrzeug bewegt, so kann die Blickrichtung zur Fahrzeughochachse geneigt sein. Insbesondere kann die Blickrichtung eine Richtungskomponente einer Fahrtrichtung aufweisen, insbesondere in Fahrtrichtung des Kraftfahrzeugs weisen. Eine solche Vorgehensweise ist besonders benutzerfreundlich; denn das angezeigte Bild wird quasi an den Bewegungszustand des Kraftfahrzeugs angepasst.

Unter einer "Blickrichtung" wird hier diejenige Richtung verstanden, aus welcher ein virtueller Betrachter beim Betrachten des Bildes blickt.

Die Bilddaten werden durch zumindest eine optische Erfassungseinrichtung erfasst. Es erweist sich als besonders vorteilhaft, wenn die Bilddaten durch zumindest zwei, insbesondere durch zumindest drei, optische Erfassungseinrichtungen erfasst werden. Es können auch insgesamt vier optische Erfassungseinrichtungen vorgesehen sein. Es können also insgesamt mehrere Erfassungseinrichtung eingesetzt werden, nämlich eine Erfassungseinrichtung an einer linken Seitenflanke und/oder eine Erfassungseinrichtung an einem linken Außenspiegel und/oder eine Erfassungseinrichtung an einer rechten Seitenflanke und/oder eine Erfassungseinrichtung an einem rechten Außenspiegel und/oder eine Erfassungseinrichtung an einem vorderen Stoßfänger und/oder eine an einem hinteren Stoßfänger des Kraftfahrzeugs oder aber an einer Heckklappe. Insgesamt kann durch die Erfassungseinrichtungen ein 360°-Bild der Umgebung um das Kraftfahrzeug herum erfasst werden. Die zumindest eine Erfassungseinrichtung kann beispielsweise eine Kamera sein, nämlich insbesondere eine CMOS-Kamera (Complementary Metal Oxid Semiconductor) oder eine CCD-Kamera (Charge-coupled Device).

Vorzugsweise weist die zumindest eine optische Erfassungseinrichtung einen Erfassungswinkel aus einem Wertebereich von 170° bis 195° auf. Also ist die zumindest eine Erfassungseinrichtung vorzugsweise eine Fischaugenkamera. Auf diesem Wege gelingt es, mit lediglich drei oder vier Erfassungseinrichtungen die gesamte Umgebung um das Kraftfahrzeug herum zu erfassen. Das Fahrerassistenzsystem kommt also mit einer relativ geringen Anzahl der Erfassungseinrichtungen aus.

Anhand der Bilddaten und/oder anhand von Daten eines Abstandssensors - insbesondere eines Ultraschallsensors - kann das Fahrerassistenzsystem zumindest ein fahrzeugexternes Objekt detektieren. Dann kann dieses Objekt in dem angezeigten Bild zumindest bereichsweise durch ein vorbestimmtes Symbol überlagert bzw. durch dieses Symbol verdeckt werden. Somit können Objekte in der Umgebung des Kraftfahrzeugs hervorgehoben werden, sodass sie durch den Fahrer deutlich früher erkannt werden können.

Erfindungsgemäß wird darüber hinaus ein Fahrerassistenzsystem für ein Kraftfahrzeug bereitgestellt. Das Fahrerassistenzsystem umfasst zumindest eine optische Erfassungseinrichtung zum Erfassen von Bilddaten über eine Umgebung des Kraftfahrzeugs, wie auch eine Steuereinrichtung bzw. Recheneinrichtung zum Verarbeiten der Bilddaten zu einem Bild, welches von oberhalb des Kraftfahrzeugs eine Draufsicht auf zumindest einen Bereich des Kraftfahrzeugs und einen Umgebungsbereich neben dem Kraftfahrzeug zeigt. Das Bild wird auf einer Anzeigeeinrichtung gezeigt. Die Steuereinrichtung ist dazu ausgelegt, in einem ersten Betriebsmodus des Fahrerassistenzsystems ein Bild zu erzeugen, in welchem der Umgebungsbereich weiter vom Kraftfahrzeug weg reicht als in einem Bild, welches in einem vom ersten Betriebsmodus unterschiedlichen zweiten Betriebsmodus erzeugbar ist.

Ein erfindungsgemäßes Kraftfahrzeug beinhaltet ein erfindungsgemäßes Fahrerassistenzsystem. Die mit Bezug auf das erfindungsgemäße Verfahren vorgestellten bevorzugten Ausführungsformen und deren Vorteile gelten entsprechend für das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung eine Draufsicht auf ein Kraftfahrzeug mit einem Fahrerassistenzsystem gemäß einer Ausführungsform der Erfindung;
- Fig. 2: in schematischer Darstellung ein beispielhaftes erstes Bild, welches in einem ersten Betriebsmodus des Fahrerassistenzsystems erzeugt und angezeigt wird;
- Fig. 3: in schematischer Darstellung ein beispielhaftes zweites Bild, welches in einem zweiten Betriebsmodus erzeugt und angezeigt wird; und
- Fig. 4 - 6: eine zeitliche Abfolge von Bildern, die während der Vermessung einer Parklücke sowie während eines Parkvorgangs aus jeweils aktuell erfassten Bilddaten erzeugt und angezeigt werden.

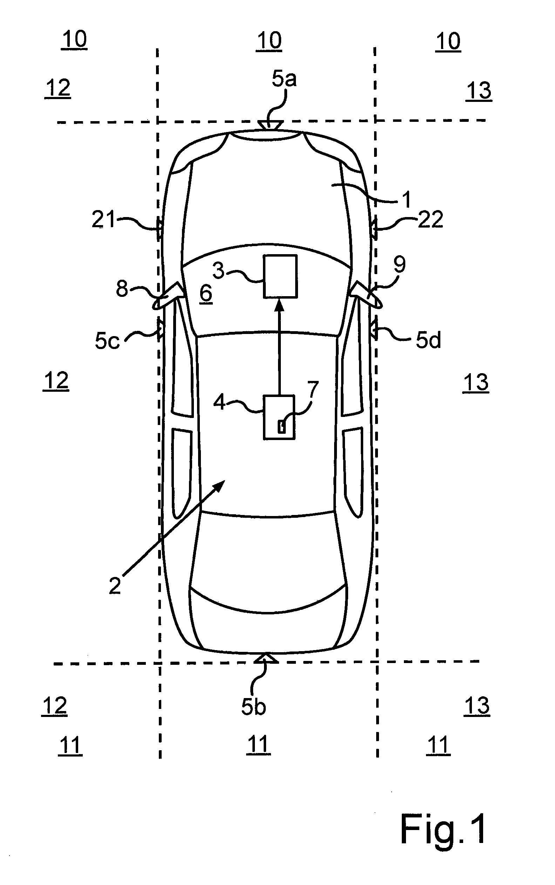

Ein Kraftfahrzeug 1, wie es in Fig. 1 dargestellt ist, ist ein Personenkraftwagen. Das Kraftfahrzeug 1 umfasst ein Fahrerassistenzsystem 2, welches folgende Komponenten umfasst: eine Anzeigeeinrichtung 3, eine Steuereinrichtung 4, wie auch vier Kameras 5a bis 5d. Die Steuereinrichtung 4 steuert die Anzeigeeinrichtung 3 an. Die Kameras 5a bis 5d übermitteln erfasste Bilddaten an die Steuereinrichtung 4, nämlich beispielsweise über einen internen Kommunikationsbus des Kraftfahrzeugs 1.

Die Anzeigeeinrichtung 3 kann beispielsweise ein LCD-Display sein. Sie kann aber auch ein Bildprojektor sein, mittels dessen Bilder auf eine Windschutzscheibe 6 des Kraftfahrzeugs 1 projiziert werden können (ein Head-up-Display).

In der Steuereinrichtung 4, nämlich in einem Speicher 7, ist ein Abbild des Kraftfahrzeugs 1 abgespeichert, und genauer gesagt Daten, die ein Abbild des Kraftfahrzeugs 1 repräsentieren.

Die Kameras 5a bis 5d sind an einer äußeren Oberfläche des Kraftfahrzeugs 1 angebracht. Die Anzahl sowie die Anordnung der Kameras 5a bis 5d ist in Fig. 1 lediglich beispielhaft dargestellt; je nach Ausführungsform kann die Anzahl der Kameras 5a bis 5d sowie deren Anordnung an dem Kraftfahrzeug 1 variieren. Im Ausführungsbeispiel ist eine erste Kamera 5a an einem vorderen Stoßfänger des Kraftfahrzeugs 1 angeordnet, während eine zweite Kamera 5b an einem hinteren Stoßfänger oder aber an einer Heckklappe angeordnet ist. Eine dritte Kamera 5c ist an der linken Seitenflanke angebracht; sie kann auch in einen linken Außenspiegel 8 integriert sein. Eine vierte Kamera 5d ist an der rechten Seitenflanke angebracht, nämlich im Bereich eines rechten Außenspiegels 9. Auch die vierte Kamera 5d kann in den Außenspiegel 9 integriert sein.

Die Kameras 5a bis 5d weisen jeweils einen breiten Erfassungswinkel auf und sind somit so genannte Fischaugenkameras. Zum Beispiel kann der jeweilige Erfassungswinkel in einem Wertebereich von 170°bis 195° liegen. Wie aus Fig. 1 hervorgeht, erfasst die erste Kamera 5a einen Bereich 10 vor dem Kraftfahrzeug 1, während die zweite Kamera 5b einen Bereich 11 hinter dem Kraftfahrzeug 1 erfasst. Entsprechend erfasst die dritte Kamera 5c einen Bereich 12 links neben dem Kraftfahrzeug 1; die vierte Kamera 5d erfasst einen Bereich 13 rechts neben dem Kraftfahrzeug 1. Die Kameras 5a bis 5d können also im Wesentlichen die gesamte Umgebung um das Kraftfahrzeug 1 herum erfassen, nämlich ein 360°-Bild.

Die Steuereinrichtung 4 kann die durch die Kameras 5a bis 5d erfassten Bilddaten verarbeiten. Die Steuereinrichtung 4 kann anhand der Bilddaten ein Bild erzeugen, welches von oberhalb des Kraftfahrzeugs 1 eine Draufsicht auf die Umgebung des Kraftfahrzeugs 1 zeigt, nämlich auf die Erfassungsbereiche 10 bis 13. Die Steuereinrichtung 4 kann also aus den Bilddaten ein Bild erzeugen, welches aus einer Vogelperspektive eine Draufsicht auf die Erfassungsbereiche 10 bis 13 zeigt.

Wie bereits ausgeführt, ist in dem Speicher 7 ein Abbild des Kraftfahrzeugs 1 abgespeichert. Auch dieses Abbild zeigt das Kraftfahrzeug 1 aus einer Vogelperspektive; dieses Abbild zeigt mit anderen Worten eine Draufsicht auf das Kraftfahrzeug 1 von oberhalb desselben. Die Steuereinrichtung 4 kann aus dem Abbild des Kraftfahrzeugs 1 und dem anhand der Bilddaten erzeugten Abbild der Umgebung ein Umgebungsbild erzeugen, welches eine Draufsicht sowohl auf das Kraftfahrzeug 1 als auch auf die Umgebung um das Kraftfahrzeug 1 herum zeigt, nämlich aus einer Vogelperspektive. In einem einzigen Umgebungsbild werden somit sowohl die Umgebung des Kraftfahrzeugs 1 als auch das Kraftfahrzeug 1 selbst aus einer Vogelperspektive dargestellt. Dieses Umgebungsbild kann die Steuereinrichtung 4 auf der Anzeigeeinrichtung 3 anzeigen. Dieses Umgebungsbild kann kontinuierlich angezeigt werden; dies bedeutet, dass sich das Umgebungsbild fortlaufend bzw. dynamisch an die Umgebung des Fahrzeugs 1 anpassen kann. Die Bilddaten werden nämlich fortlaufend durch die Kameras 5a bis 5d erfasst, und das Umgebungsbild wird aus den fortlaufend erfassten Bilddaten dynamisch jeweils neu erzeugt. In dem Umgebungsbild kann das Kraftfahrzeug 1 ortsfest bzw. stationär gezeigt werden, während das Abbild der Umgebung stets aktualisiert und dynamisch angepasst werden kann.

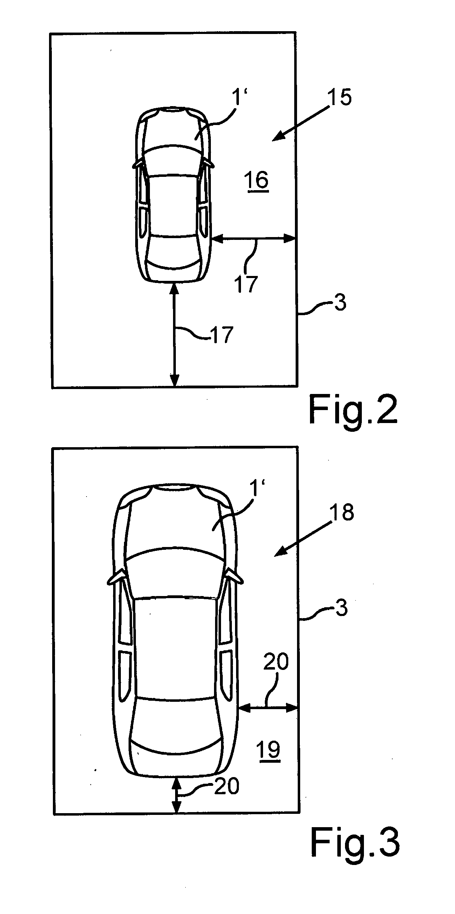

Im Ausführungsbeispiel kann die Steuereinrichtung 4 prinzipiell zwei verschiedene Umgebungsbilder erzeugen, nämlich aus den Bilddaten der Kameras 5a bis 5d. Und zwar kann die Steuereinrichtung 4 ein erstes Umgebungsbild erzeugen, wie es in schematischer Darstellung in Fig. 2 beispielhaft gezeigt und mit 15 bezeichnet ist. Das erste Umgebungsbild 15 kann auf der Anzeigeeinrichtung 3 angezeigt werden. Das erste Umgebungsbild 15 zeigt aus einer Vogelperspektive eine Draufsicht auf das Kraftfahrzeug 1' sowie auf einen Umgebungsbereich 16 um das Kraftfahrzeug 1' herum. Obwohl in Fig. 2 nicht näher dargestellt, wird im Umgebungsbild 15 der reale Umgebungsbereich 16 abgebildet bzw. realitätsgetreu dargestellt. Dies, weil die Kameras 5a bis 5d die reale Umgebung um das Kraftfahrzeug 1 herum erfassten und die Steuereinrichtung 4 das Umgebungsbild 15 in Echtzeit aus den Bilddaten jeweils neu erzeugt. Das erste Umgebungsbild 15 zeichnet sich dadurch aus, dass es den Umgebungsbereich 16 bis zu einer Entfernung 17 vom Kraftfahrzeug 1' weg zeigt, die in einem Wertebereich von 7 m bis 13 m liegt. Das erste Umgebungsbild 15 kann den Umgebungsbereich 16 seitlich neben dem Kraftfahrzeug 1' bis zu einer Entfernung 17 von 9 m oder 10 m oder 11 m zeigen, während der Umgebungsbereich 16 hinter und vor dem Kraftfahrzeug 1' bis zu einer Entfernung 17 von 8 m oder 9 m oder 10 m gezeigt werden kann. Im Vergleich zu bekannten vogelperspektivischen Bildern zeigt das erste Umgebungsbild 15 also einen erweiterten Umgebungsbereich 16, welcher sich bis zu einer relativ großen Entfernung 17 vom Kraftfahrzeug 1' weg erstreckt.

Das erste Umgebungsbild 15 kann im Prinzip auf zwei verschiedene Art und Weisen erzeugt werden: Zum einen können ausschließlich die jeweils augenblicklich bzw. momentan erfassten Bilddaten zur Erzeugung des Umgebungsbilder 15 herangezogen werden. Alternativ - wenn der Umgebungsbereich 16 bis zur Entfernung 17 nicht erfasst werden kann - kann das Umgebungsbild 15 sowohl aus den momentan erfassten Bilddaten als auch aus zuvor erfassten Bilddaten erzeugt werden. Gemäß dieser Alternative kann also das Umgebungsbild 15 mittels einer Odometrie erzeugt werden.

Die Steuereinrichtung 4 kann außerdem ein zweites Umgebungsbild 18 erzeugen, wie es beispielhaft und in schematischer Darstellung in Fig. 3 gezeigt ist. Auch dieses zweite Umgebungsbild 18 zeigt aus einer Vogelperspektive eine Draufsicht auf das Kraftfahrzeug 1' sowie einen Umgebungsbereich 19 um das Kraftfahrzeug 1' herum. Auch das Umgebungsbild 18 zeigt ein reales Abbild des Umgebungsbereichs 19, obwohl in Fig. 3 dies nicht explizit dargestellt ist. Wie aus Fig. 3 hervorgeht, ist das Abbild des Kraftfahrzeugs 1' in Fig. 3 größer als das Abbild des Kraftfahrzeugs 1' im ersten Umgebungsbild 15 gemäß Fig. 2. Dies liegt darin, dass das zweite Umgebungsbild 18 den Umgebungsbereich 19 nur bis zu einer geringeren Entfernung 20 vom Kraftfahrzeug 1' weg zeigt. Diese Entfernung 20 kann beispielsweise in einem Wertebereich von 50 cm bis 2 m liegen. Zum Beispiel kann das zweite Umgebungsbild 18 den Umgebungsbereich 19 seitlich neben dem Kraftfahrzeug 1' bis zu einer Entfernung 20 von 1 m oder 1,5 m zeigen, während der Umgebungsbereich 19 hinter und vor dem Kraftfahrzeug 1' bis zu einer Entfernung 20 von 50 cm oder 1 m gezeigt werden kann. Anhand des zweiten Umgebungsbildes 18 kann der Fahrer also mit hoher Genauigkeit jeweilige Abstände zwischen dem Kraftfahrzeug 1 und im Umgebungsbereich 19 vorhandenen fahrzeugexternen Hindernissen ermitteln.

Auf der Anzeigeeinrichtung 3 können das erste und das zweite Umgebungsbild 15, 18 wahlweise dargestellt werden, d.h. es kann entweder das erste Umgebungsbild 15 oder das zweite Umgebungsbild 18 dargestellt werden.

Im Ausführungsbeispiel ist vorgesehen, dass das erste Umgebungsbild 15 in einem ersten Betriebsmodus des Fahrerassistenzsystems 2 erzeugt und angezeigt wird, während das zweite Umgebungsbild 18 in einem vom ersten Betriebsmodus unterschiedlichen zweiten Betriebsmodus des Fahrerassistenzsystems 2 erzeugt und angezeigt wird. Im ersten Betriebsmodus werden durch das Fahrerassistenzsystem 2 Parklücken vermessen, die sich auf den jeweiligen Seiten des Kraftfahrzeugs 1, nämlich links und rechts neben dem Kraftfahrzeug 1 befinden. Zu diesem Zwecke können beispielsweise Abstandssensoren 21, 22 (siehe Fig. 1) eingesetzt werden, nämlich insbesondere Ultraschallsensoren. Ein erster Abstandssensor 21 ist an einer linken Seitenflanke des Kraftfahrzeugs 1, beispielsweise im linken Randbereich des vorderen Stoßfängers angeordnet, während der zweite Abstandssensor 22 symmetrisch an der gegenüberliegenden Seite des Kraftfahrzeugs 1 angeordnet ist. Die Parklücken werden während einer Vorbeifahrt des Kraftfahrzeugs 1 an den Parklücken vermessen. Im ersten Betriebsmodus werden außerdem Parkvorgänge durchgeführt, nämlich unter Unterstützung des Fahrerassistenzsystems 2. Die Unterstützung eines Parkvorgangs hat zum Inhalt, dass durch die Steuereinrichtung 4 in Abhängigkeit von der relativen Position des Kraftfahrzeugs 1 bezüglich der Parklücke eine Parkbahn berechnet wird, entlang welcher das Kraftfahrzeug 1 kollisionsfrei in die Parklücke eingeparkt werden kann. Die Unterstützung beinhaltet auch, dass dem Fahrer entweder Informationen bzw. Hinweise zur Lenkrichtung ausgegeben werden oder aber die Steuereinrichtung 4 in die Lenkung des Kraftfahrzeugs 1 automatisch eingreift, um die lenkbaren Räder des Kraftfahrzeugs 1 autonom zu lenken. Also wird das erste Umgebungsbild 15 dann erzeugt, wenn das Fahrerassistenzsystem 2 geeignete Parklücken in der Umgebung des Kraftfahrzeugs 1 sucht und darüber hinaus den Parkvorgang unterstützt. Der erste Betriebsmodus kann beispielsweise dann beendet werden, wenn das Kraftfahrzeug 1 eine Endposition in der Parklücke erreicht oder aber sich der Endposition annähert und ein Restweg der berechneten Parkbahn ein vorgegebenes Minimum unterschreitet.

Demgegenüber wird das zweite Umgebungsbild 18 im zweiten Betriebsmodus des Fahrerassistenzsystems 2 erzeugt und angezeigt. Der zweite Betriebsmodus ist insbesondere ein Kollisionswarnungsmodus, welcher der Kollisionsvermeidung dient. Der Fahrer kann in dem zweiten Betriebsmodus des Fahrerassistenzsystems 2 mit hoher Genauigkeit die Abstände zwischen dem Kraftfahrzeug 1 und den fahrzeugexternen Hindernissen ermitteln und das Kraftfahrzeug 1 somit kollisionsfrei rangieren.

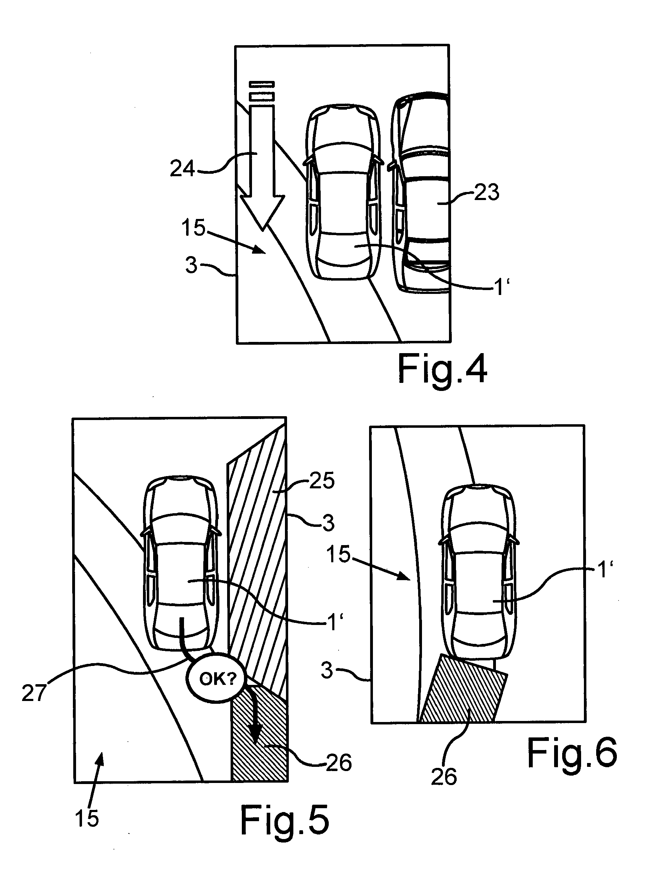

Die Funktionsweise des Fahrerassistenzsystems 2 in dem ersten Betriebsmodus kann beispielsweise anhand der Figuren 4 bis 6 erläutert werden. Die Figuren 4 bis 6 zeigen eine zeitliche Abfolge von Bildern 15 (erstes Umgebungsbild 15 gemäß Fig. 2), die während einer Vermessung einer Parklücke sowie während eines Parkvorgangs aus den jeweils aktuellen Bilddaten erzeugt und auf der Anzeigeeinrichtung 3 angezeigt werden. Das Bild 15 gemäß Fig. 4 zeigt eine Draufsicht auf das Kraftfahrzeug 1', welches auf einer Strecke entlang einer Reihe von anderen Kraftfahrzeugen (rechts) gefahren wird. Die Abstandssensoren 21, 22 erfassen fortlaufend die Abstände zu den benachbarten Objekten links und rechts des Kraftfahrzeugs 1. In dem Augenblick gemäß Fig. 4 befindet sich neben dem Kraftfahrzeug 1' ein anderes Kraftfahrzeug 23, nämlich auf der rechten Seite. Das Kraftfahrzeug 1' ist - wie bereits ausgeführt - ortsfest dargestellt, während das Abbild der Umgebung gemäß der Pfeildarstellung 24 bewegt bzw. an die reale Umgebung fortlaufend angepasst wird.

Im Bild 15 gemäß Fig. 5 ist das nebenstehende Kraftfahrzeug 23 durch ein Symbol 25 überlagert bzw. verdeckt. Somit wird das andere Kraftfahrzeug 23 hervorgehoben. Die Steuereinrichtung 4 erkennt auch eine für das Einparken geeignete Parklücke 26, in welche das Kraftfahrzeug 1 kollisionsfrei eingeparkt werden kann. Nun wird der Fahrer darüber informiert, dass eine geeignete Parklücke 26 gefunden wurde. Der Fahrer wird gefragt, ob das Kraftfahrzeug 1 in die gefundene Parklücke 26 eingeparkt werden soll oder nicht. Der Fahrer kann den Parkvorgang freigeben, indem er eine entsprechende Eingabe vornimmt.

Die Steuereinrichtung 4 berechnet auch eine Parkbahn 27, entlang welcher das Kraftfahrzeug 1 in die Parklücke 26 kollisionsfrei eingeparkt werden kann. Diese Parkbahn 27 kann ebenfalls im Bild 15 gezeigt werden, nämlich schematisch.

Gibt der Fahrer den Parkvorgang frei, so kann das Kraftfahrzeug 1 in die Parklücke 26 eingeparkt werden. Während des Vorgangs des Einparkens ist das Kraftfahrzeug 1' weiterhin ortsfest dargestellt, während lediglich das Abbild der Umgebung verändert wird. In Fig. 6 ist ein Bild 15 dargestellt, in welchem das Kraftfahrzeug 1' in die Parklücke 26 eintritt.

In den Figuren 4 bis 6 ist das Kraftfahrzeug 1 sowie seine Umgebung aus einer Blickrichtung gezeigt, die mit der Fahrzeughochachse zusammenfällt. Es kann auch vorgesehen sein, dass diese Blickrichtung zur Fahrzeuglängsachse geneigt wird. Beispielsweise kann die Blickrichtung in Fahrtrichtung des Kraftfahrzeugs 1 zeigen.

## Patentansprüche

1. Verfahren zum Anzeigen von Biidern (15, 18) auf einer Anzeigeeinrichtung (3) eines
Fahrerassistenzsystems (2) in einem Kraftfahrzeug (1), mit den Schritten:
- Erfassen von Bilddaten über eine Umgebung (10 bis 13) des Kraftfahrzeugs (1) durch zumindest eine optische Erfassungseinrichtung (5a bis 5d) des Fahrerassistenzsystems (2),
- Verarbeiten der Bilddaten zu einem Bild (15, 18), welches von oberhalb des Kraftfahrzeugs (1) eine Draufsicht auf zumindest einen Bereich des Kraftfahrzeugs (1') und einen Umgebungsbereich (16, 19) neben dem Kraftfahrzeug (1) zeigt, und
- Anzeigen des Bildes (15, 18) auf der Anzeigeeinrichtung (3),
**dadurch gekennzeichnet, dass**
in einem ersten Betriebsmodus des Fahrerassistenzsystems (2), in dem eine Parklücke (26) durch das Fahrerassistenzsystem (2) vermessen wird, der angezeigte Umgebungsbereich (16, 19) weiter vom Kraftfahrzeug (1) weg reicht als in einem vom ersten Betriebsmodus unterschiedlichen zweiten Betriebsmodus.

2. Verfahren nach Anspruch 1,
**dadurch gekennzeichnet, dass**
in dem ersten Betriebsmodus das Kraftfahrzeug (1) unter Unterstützung des Fahrerassistenzsystems (2) in die Parklücke (26) eingeparkt und/oder aus der Parklücke (26) ausgeparkt wird.

3. Verfahren nach Anspruch 1 oder 2,
**dadurch gekennzeichnet, dass**
in dem angezeigten Bild (15, 18) das Abbild des Kraftfahrzeugs (1') ortsfest, insbesondere mittig auf der Anzeigeeinrichtung (3), dargestellt wird, während das Abbild des Umgebungsbereichs (16, 19) aus den Bilddaten jeweils neu erzeugt wird.

4. Verfahren nach einem der vorhergehenden Ansprüche,
**dadurch gekennzeichnet, dass**
das Bild (15, 18) eine Draufsicht auf das gesamte Kraftfahrzeug (1') und den Umgebungsbereich (16, 19) um das Kraftfahrzeug (1) herum zeigt.

5. Verfahren nach einem der vorhergehenden Ansprüche,
**dadurch gekennzeichnet, dass**
sich der weiter reichende Umgebungsbereich (16) bis zu einer Entfernung (17) vom Kraftfahrzeug (1) weg erstreckt, die in einem Wertebereich von 7 m bis 13 m liegt.

6. Verfahren nach einem der vorhergehenden Ansprüche,
**dadurch gekennzeichnet, dass**
das Abbild des angezeigten Umgebungsbereichs (16, 19) alleine aus den jeweils aktuell erfassten Bilddaten.

7. Verfahren nach einem der Ansprüche 1 bis 6,
**dadurch gekennzeichnet, dass**
das Abbild des angezeigten Umgebupgsbereichs (16, 19) aus den jeweils aktuell erfassten Bilddaten und zusätzlich aus zuvor erfassten Bilddaten erzeugt wird.

8. Verfahren nach einem der vorhergehenden Ansprüche,
**dadurch gekennzeichnet, dass**
die Bilddaten derart verarbeitet werden, dass das angezeigte Bild (15, 18) die Draufsicht aus einer Blickrichtung zeigt, die mit einer Fahrzeughochachse zusammenfällt oder zur Fahrzeughochachse geneigt ist.

9. Verfahren nach einem der vorhergehenden Ansprüche,
**dadurch gekennzeichnet, dass**
die Bilddaten durch zumindest zwei, insbesondere zumindest drei, optische Erfassungseinrichtungen (5a bis 5d) erfasst werden.

10. Verfahren nach einem der vorhergehenden Ansprüche,
**dadurch gekennzeichnet, dass**
die zumindest eine optische Erfassungseinrichtung (5a bis 5d) einen Erfassungswinkel aus einem Wertebereich von 170° bis 195° aufweist.

11. Verfahren nach einem der vorhergehenden Ansprüche,
**dadurch gekennzeichnet, dass**
im zweiten Betriebsmodus keine Vermessung der Parklücke (26) stattfindet und/oder keine Parkvorgänge durchgeführt werden.

12. Verfahren nach einem der vorhergehenden Ansprüche,
**dadurch gekennzeichnet, dass**
der zweite Betriebsmodus ein Modus ist, bei welchem der Fahrer des Kraftfahrzeugs (1) vor der Anwesenheit eines Hindernisses in der unmittelbaren Umgebung des Kraftfahrzeugs (1) gewarnt wird.

13. Verfahren nach einem der vorhergehenden Ansprüche,
**dadurch gekennzeichnet, dass**
von dem ersten Betriebsmodus zum zweiten Betriebsmodus übergegangen wird, wenn das Kraftfahrzeug (1) in die Parklücke (26) gelangt ist und/oder wenn ein Restweg der berechneten Parkbahn ein vorgegebenes Minimum unterschreitet.

14. Fahrerassistenzsystem (2) für ein Kraftfahrzeug (1), mit:
- zumindest einer optischen Erfassungseinrichtung (5a bis 5d) zum Erfassen von Bilddaten über eine Umgebung (10 bis 13) des Kraftfahrzeugs (1),
- einer Steuereinrichtung (4) zum verarbeiten der Bilddaten zu einem Bild (15, 18), welches von oberhalb des Kraftfahrzeugs (1) eine Draufsicht auf zumindest einen Bereich des Kraftfahrzeugs (1') und einen Umgebungsbereich (16, 19) neben dem Kraftfahrzeug (1') zeigt, und
- einer Anzeigeeinrichtung (3) zum Anzeigen des Bildes (15, 18),
**dadurch gekennzeichnet, dass**
die Steuereinrichtung (4) dazu ausgelegt ist, in einem ersten Betriebsmodus des Fahrerassistenzsystems (2), in dem eine Parklücke (26) durch das Fahrerassistenzsystem (2) vermessen wird, ein Bild (15, 18) zu erzeugen, in welchem der Umgebungsbereich (16, 19) weiter vom Kraftfahrzeug (1) weg reicht als in einem Bild (15, 18), welches in einem vom ersten Betriebsmodus unterschiedlichen zweiten Betriebsmodus erzeugbar ist.

15. Kraftfahrzeug (1) mit einem Fahrerassistenzsystem (2) nach Anspruch 14.

## Claims

1. Method for displaying images (15, 18) on a display device (3) of a
driver assistance system (2) in a motor vehicle (1), comprising the steps:
- capturing image data about surroundings (10 to 13) of the motor vehicle (1) by means of at least one optical image-capturing device (5a to 5d) of the driver assistance system (2),
- processing the image data to form an image (15, 18) which shows a plan view of at least one area of the motor vehicle (1') and a surrounding area (16, 19) next to the motor vehicle (1) from above the motor vehicle (1), and
- displaying the image (15, 18) on the display device (3),
**characterized in that**
in a first operating mode of the driver assistance system (2) in which a parking space (26) is measured by the driver assistance system (2), the displayed surrounding area (16, 19) extends further away from the motor vehicle (1) than in a second operating mode which is different from the first operating mode.

2. Method according to Claim 1,
**characterized in that**
in the first operating mode, the motor vehicle (1) is moved into the parking space (26) and/or moved out of the parking space (26) with the support of the driver assistance system (2).

3. Method according to Claim 1 or 2,
**characterized in that**
in the displayed image (15, 18), the representation of the motor vehicle (1') is displayed in a positionally fixed fashion, in particular centrally on the display device (3), while the representation of the surrounding area (16, 19) is newly generated in each case on the basis of the image data.

4. Method according to one of the preceding claims,
**characterized in that**
the image (15, 18) shows a plan view of the entire motor vehicle (1') and the surrounding area (16, 19) around the motor vehicle (1).

5. Method according to one of the preceding claims,
**characterized in that**
the surrounding area (16) which extends further, reaches as far as a distance (17) from the motor vehicle (1) which is in a value range between 7 m and 13 m.

6. Method according to one of the preceding claims,
**characterized in that**
the representation of the displayed surrounding area (16, 19) is generated solely on the basis of the respectively currently captured image data.

7. Method according to one of Claims 1 to 6,
**characterized in that**
the representation of the displayed surrounding area (16, 19) is generated on the basis of the respectively currently captured image data and additionally on the basis of the previously captured image data.

8. Method according to one of the preceding claims,
**characterized in that**
the image data is processed in such a way that the displayed image (15, 18) shows the plan view from a viewing direction which coincides with a vertical axis of the vehicle or is inclined with respect to the vertical axis of the vehicle.

9. Method according to one of the preceding claims,
**characterized in that**
the image data is captured by means of at least two, in particular at least three, optical image-capturing devices (5a to 5d).

10. Method according to one of the preceding claims,
**characterized in that**
the at least one optical image-capturing device (5a to 5d) has a capturing angle from a value range from 170° to 195°.

11. Method according to one of the preceding claims,
**characterized in that**
in the second operating mode, the parking space (26) is not measured and/or parking processes are not carried out.

12. Method according to one of the preceding claims,
**characterized in that**
the second operating mode is a mode in which the driver of the motor vehicle (1) is warned about the presence of an obstacle in the direct vicinity of the motor vehicle (1).

13. Method according to one of the preceding claims,
**characterized in that**
there is a changeover from the first operating mode to the second operating mode if the motor vehicle (1) has arrived in the parking space (26) and/or if residual travel of the calculated parking path undershoots a predefined minimum.

14. Driver assistance system (2) for a motor vehicle (1), comprising:
- at least one optical image-capturing device (5a to 5d) for capturing image data about surroundings (10 to 13) of the motor vehicle (1),
- a control device (4) for processing the image data to form an image (15, 18) which shows a plan view of at least one area of the motor vehicle (1') and a surrounding area (16, 19) next to the motor vehicle (1') from above the motor vehicle (1), and
- a display device (3) for displaying the image (15, 18),
**characterized in that**
in a first operating mode of the driver assistance system (2) in which a parking space (26) is measured by the driver assistance system (2), the control device (4) is configured to generate an image (15, 18) in which the surrounding area (16, 19) extends further away from the motor vehicle (1) than in an image (15, 18) which can be generated in a second operating mode which is different from the first operating mode.

15. Motor vehicle (1) having a driver assistance system (2) according to Claim 14.

## Revendications

1. Procédé pour afficher des images (15, 18) sur un dispositif d'affichage (3) d'un système d'assistance au conducteur (2) dans un véhicule automobile (1), comprenant les étapes suivantes :
- acquisition de données d'image sur un environnement (10 à 13) du véhicule automobile (1) par au moins un dispositif d'acquisition optique (5a à 5d) du système d'assistance au conducteur (2),
- traitement des données d'image pour former une image (15, 18) qui montre une vue de dessus depuis le dessus du véhicule automobile (1) sur au moins une zone du véhicule automobile (1') et une zone environnante (16, 19) à côté du véhicule automobile (1), et
- affichage de l'une image (15, 18) sur le dispositif d'affichage (3),
**caractérisé en ce que**
dans un premier mode de fonctionnement du système d'assistance au conducteur (2), dans lequel un emplacement de stationnement (26) est mesuré par le système d'assistance au conducteur (2), la zone environnante (16, 19) affichée s'étend plus loin du véhicule automobile (1) que dans un deuxième mode de fonctionnement différent du premier mode de fonctionnement.

2. Procédé selon la revendication 1, **caractérisé en ce que** dans le premier mode de fonctionnement, le véhicule automobile (1) entre en stationnement dans l'emplacement de stationnement (26) et/ou sort de stationnement de l'emplacement de stationnement (26) sous l'assistance du système d'assistance au conducteur (2).

3. Procédé selon la revendication 1 ou 2, **caractérisé en ce que** dans l'image (15, 18) affichée, la représentation du véhicule automobile (1') apparaît en position fixe, notamment au centre du dispositif d'affichage (3), alors que la représentation de la zone environnante (16, 19) est à chaque fois de nouveau générée à partir des données d'image.

4. Procédé selon l'une des revendications précédentes, **caractérisé en ce que** l'image (15, 18) montre une vue de dessus de la totalité du véhicule automobile (1') et de la zone environnante (16, 19) autour du véhicule automobile (1).

5. Procédé selon l'une des revendications précédentes, **caractérisé en ce que** la zone environnante (16) qui s'étend plus loin se prolonge jusqu'à une distance (17) du véhicule automobile (1), laquelle est comprise dans une plage de valeurs de 7 m à 13 m.

6. Procédé selon l'une des revendications précédentes, **caractérisé en ce que** la représentation de la zone environnante (16, 19) affichée est générée uniquement à partir des données d'image acquises actuellement.

7. Procédé selon l'une des revendications 1 à 6, **caractérisé en ce que** la représentation de la zone environnante (16, 19) affichée est générée à partir des données d'image à chaque fois acquises actuellement et en plus à partir de données d'image acquises précédemment.

8. Procédé selon l'une des revendications précédentes, **caractérisé en ce que** les données d'image sont traitées de telle sorte que l'image affichée (15, 18) montre la vue de dessus depuis une direction de visée qui coïncide avec un axe vertical du véhicule ou qui est inclinée par rapport à l'axe vertical du véhicule.

9. Procédé selon l'une des revendications précédentes, **caractérisé en ce que** les données d'image sont acquises par au moins deux, notamment au moins trois dispositifs d'acquisition optiques (5a à 5d).

10. Procédé selon l'une des revendications précédentes, **caractérisé en ce que** l'au moins un dispositif d'acquisition optique (5a à 5d) présente un angle d'acquisition compris dans une plage de valeurs de 170° à 195°.

11. Procédé selon l'une des revendications précédentes, **caractérisé en ce que** dans le deuxième mode de fonctionnement, aucune mesure de l'emplacement de stationnement (26) n'a lieu et/ou aucune manoeuvre de stationnement n'est exécutée.

12. Procédé selon l'une des revendications précédentes, **caractérisé en ce que** le deuxième mode de fonctionnement est un mode avec lequel le conducteur du véhicule automobile (1) est alerté de la présence d'un obstacle dans l'environnement immédiat du véhicule automobile (1).

13. Procédé selon l'une des revendications précédentes, **caractérisé en ce que** la transition du premier mode de fonctionnement au deuxième mode de fonctionnement a lieu lorsque le véhicule automobile (1) est parvenu dans l'emplacement de stationnement (26) et/ou lorsque le trajet restant de la trajectoire de stationnement calculée devient inférieur à un minimum prédéfini.

14. Système d'assistance au conducteur (2) pour un véhicule automobile (1), comprenant :
- au moins un dispositif d'acquisition optique (5a à 5d) servant à l'acquisition de données d'image sur un environnement (10 à 13) du véhicule automobile (1),
- un dispositif de commande (4) servant au traitement des données d'image pour former une image (15, 18) qui montre une vue de dessus depuis le dessus du véhicule automobile (1) sur au moins une zone du véhicule automobile (1') et une zone environnante (16, 19) à côté du véhicule automobile (1'), et
- un dispositif d'affichage (3) servant à l'affichage de l'image (15, 18),
**caractérisé en ce que**
le dispositif de commande (4) est conçu pour, dans un premier mode de fonctionnement du système d'assistance au conducteur (2), dans lequel un emplacement de stationnement (26) est mesuré par le système d'assistance au conducteur (2), générer une image (15, 18) dans laquelle la zone environnante (16, 19) s'étend plus loin du véhicule automobile (1) que dans une image (15, 18) qui peut être générée dans un deuxième mode de fonctionnement différent du premier mode de fonctionnement.

15. Véhicule automobile (1) équipé d'un système d'assistance au conducteur (2) selon la revendication 14.
